(19)

Europäisches
Patentamt
European
Patent Office
Office européen
des brevets

(11)     **EP 2 437 450 B1**

(12)                    **EUROPEAN PATENT SPECIFICATION**

(45) Date of publication and mention
of the grant of the patent:
**03.10.2018  Bulletin 2018/40**

(21) Application number: **09846090.0**

(22) Date of filing: **28.12.2009**

(51) Int Cl.:
***H04L 27/26*** *(2006.01)*

(86) International application number:
**PCT/CN2009/076146**

(87) International publication number:
**WO 2010/145176 (23.12.2010 Gazette 2010/51)**

(54) **DEVICE AND METHOD FOR ESTIMATING TIME OFFSET IN ORTHOGONAL FREQUENCY DIVISION MULTIPLEXING (OFDM) SYSTEM**

VORRICHTUNG UND VERFAHREN ZUR SCHÄTZUNG DES ZEITVERSATZES IN EINEM OFDM-SYSTEM

DISPOSITIF ET PROCÉDÉ D ESTIMATION DU DÉCALAGE TEMPOREL DANS UN SYSTÈME DE MULTIPLEXAGE PAR RÉPARTITION ORTHOGONALE DE LA FRÉQUENCE (OFDM)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority:  **30.06.2009   CN 200910150769**

(43) Date of publication of application:
**04.04.2012   Bulletin 2012/14**

(73) Proprietor: **ZTE Corporation**
**Shenzhen, Guangdong 518057 (CN)**

(72) Inventors:
• **LI, Ping**
**Shenzhen, Guangdong 518057 (CN)**

• **QIN, Hongfeng**
**Shenzhen, Guangdong 518057 (CN)**
• **KANG, Fengqi**
**Shenzhen, Guangdong 518057 (CN)**

(74) Representative: **Manitz Finsterwald Patentanwälte PartmbB**
**Martin-Greif-Strasse 1**
**80336 München (DE)**

(56) References cited:
**EP-A2- 1 734 715          WO-A1-2005/112378**
**WO-A1-2008/026891      CN-A- 1 574 821**
**CN-A- 101 340 416        GB-A- 2 447 972**
**KR-B1- 100 880 894       US-A1- 2005 084 025**
**US-A1- 2008 304 605**

## Description

Technical Field

The present invention relates to the mobile communication field, and in particular, to a device and a method for estimating time offset in an orthogonal frequency division multiplexing (OFDM) system.

Background Art

The LTE (Long Term Evolution) project, which is the largest project of new technology development initiated by the 3GPP (3rd Generation Partnership Project) in recent years, improves and enhances the air access technology of the 3G. Compared with the 3G, the LTE has superior technical advantages, which are embodied in various aspects, such as higher user data rate, packet transport, reduction of system delay, improvement in system capacity and coverage, decrease of operation cost.

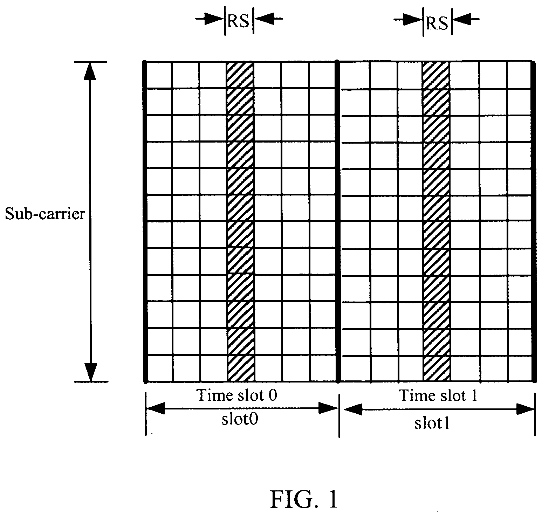

The LTE downlink uses the OFDM (Orthogonal Frequency Division Multiplexing) technique. OFDM has advantages of high utilization of frequency spectrum and anti-multipath interference, and an OFDM system can effectively resist the effect brought by wireless channels. The LTE uplink transmission scheme uses a SC-FDMA (Single Carrier Frequency Division Multiple Access) system with cyclic prefix. In the transmission scheme using SC-FDMA with cyclic prefix in the uplink, a frequency domain signal is obtained using DFT (Discrete Fourier-Transform), then a zero symbol is inserted for frequency spectrum shifting, and the shifted signal undergoes IFFT (Inverse Fast Fourier Transform) such that the peak-to-average power ratio of a transmitting terminal can be decreased. Therefore, a SC-FDMA system is also known as a DFT-spread OFDM (DFT-S-OFDM) system. As shown in FIG. 1, a position diagram of a pilot signal, i.e., a PUSCH (Physical Uplink Shared Channel) demodulation reference signal of a SC-FDMA system is shown.

Symbol timing offset will result in phase rotation of frequency domain, and phases will be accumulated with symbols in frequency domain. Time domain timing offset will increase the sensitivity degree of the OFDM to time delay spread such that the time delay spread which can be tolerated by the system will be lower than its design value. In order to reduce this negative influence as much as possible, time offset is required to be decreased as much as possible. Therefore, it is necessary to estimate the time offset and modify this offset.

Related contents of timing adjustment (TA) report is given the protocol 3GPP TS 36.213: "Evolved Universal Terrestrial Radio Access (E-UTRA); Physical layer procedures". A base station measures an uplink synchronization time offset value of a UE (User Equipment) based on an uplink received signal, sends the timing adjustment (TA) to the UE, which adjusts its own sending time based on the received value to achieve an uplink synchronization process. Therefore, time offset estimation is an indispensable part for a LTE system.

There is a corresponding relationship between symbol timing offset and sub-carrier phase. A phase of a symbol on the sub-carrier will vary accordingly as the timing changes. Phase offset generated between sub-carriers in frequency domain which is caused by timing offset $t_0$ of a sample value interval is:

$$\varphi_0 = \frac{2\pi}{N} t_0 \Delta k$$

where N is FFT (Fast Fourier Transform) point number corresponding to a sampling frequency of the system, and $\Delta k$ is carrier spacing. The symbol timing offset will cause phase offset of frequency domain, which will accumulatively increase linearly with carrier distance and will result in phase reversal when reaching a certain level. Thus, the bit error rate of the system will increase such that the link performance will be degraded. In a method for calculating time offset using a corresponding relationship between symbol timing offset and sub-carrier phase, the link performance is greatly influenced by the channel frequency domain fading characteristic, and frequency domain channel estimation values are required to belong to one user. Multi-user superimposed frequency domain channel estimation values cannot be used to calculate the time offset value directly, multi-user frequency domain data is required to be separated first and then estimated.

Therefore, a device and a method for estimating time offset for multiple users in an OFDM system are required to be provided in order to solve the problem the an uplink station receives time offset estimation.

The document WO 2005/112378 A1 discloses that, to allow a receiving entity to derive a longer channel estimate while limiting overhead, a transmitting entity transmits a pilot on different groups of subbands in different time intervals. N subbands in the system are arranged into M non-overlapping groups. Each group includes subbands that are uniformly distributed across the N subbands. The transmitting entity transmits the pilot on a different subband group in each time interval, and selects all M subband groups in M time intervals based on a pilot staggering pattern. The receiving entity derives (1) an initial impulse response estimate with P channel taps based on the pilot received on one subband group and (2) two longer impulse response estimates with different lengths used for data detection and time tracking.

The document EP 1 734 715 A2 discloses an OFDM receiver including a timing error detection unit that determines error information based on a difference between receiving timing of a desired signal from a counterpart transmitter and receiving timing of an undesired signal from a non-counterpart transmitter. The timing error detection unit includes a pilot signal detection unit configured to detect a pilot signal of the desired signal and a pilot signal of the undesired signal from an FFT-processed received signal; a first converting unit configured to convert a frequency-domain channel estimate derived from the pilot signal of the desired signal to a first time-domain channel impulse response; a second converting unit configured to convert a frequency-domain channel estimate derived from the pilot signal of the undesired signal to a second time-domain channel impulse response; and an error information determination unit configured to determine the error information based on the first and second channel impulse responses.

Summary of the Invention

To solve the technical problem, a device and a method for estimating time offset in an orthogonal frequency division multiplexing (OFDM) system according to the independent claims are provided. Further improvements are provided in the dependent claims.

Also provided is a method for estimating time offset in an orthogonal frequency division multiplexing (OFDM) system comprising the following steps of:

obtaining a pilot bit frequency domain channel estimation value of a target user;

transforming the obtained pilot bit frequency domain channel estimation value to time domain through inverse Fourier transform;

performing multi-user separation on time domain pilot channel estimation by calculating the length of an effective channel impulse response window of the target user, and performing time domain noise reduction on each antenna for each user;

searching for a peak in the effective channel impulse response window for each target user separately to determine a position of the peak; and

calculating a time offset estimation value of the user based on the position of the peak.

The pilot bit frequency domain channel estimation value of the target user is a quotient obtained by dividing a received frequency domain demodulation reference signal by a local frequency domain demodulation reference signal.

A length of the pilot bit frequency domain channel estimation value of the target user is $M$.

In the step of transforming the obtained pilot bit frequency domain channel estimation value to time domain through the inverse Fourier transform:

if $M$ is greater than or equal to $T$, the frequency domain channel estimation value is directly transformed to time domain through the inverse Fourier transform;

if $M$ is less than $T$, the obtained frequency domain channel estimation value is extended to the length of $T$ and is then transformed to time domain through the inverse Fourier transform;

where $T$ is a length parameter of channel estimation transforming from frequency domain to time domain, and is a positive integer.

The obtained frequency domain channel estimation value is extended to the length of $T$ means that: the frequency domain channel estimation value is extended to the length of $T$ by filling zeros, and filled positions are in front of or in back of the frequency domain channel estimation value, or partially in front of and partially in back of the frequency domain channel estimation value.

The step of calculating the length of the effective channel impulse response window of the target user comprises:

determining a reference position of the effective channel impulse response window of a user $m$ in a time domain sequence;
determining a front window length $L_{fore} = \lambda_f L_c$ and a rear window length $L_{post} = \lambda_p L_c$ of the reference position based on a length of cyclic prefix (CP) $L_c$, where $\lambda_f$ and $\lambda_p$ are window width adjustment factors;

adding the front window length and the rear window length to obtain the length of the effective channel impulse response window in time domain: $L_w = L_{fore} + L_{post}$.

The length of cyclic prefix $L_c$ is determined based on a relative relationship between the length $M$ of the frequency domain channel estimation value of the user $m$ and the length parameter $T$ of the channel estimation transforming from frequency domain to time domain, specifically:

if $M \geq$ T, the length corresponding to cyclic prefix is $L_c = \max\left( \left\lfloor M \cdot \dfrac{L_{CP}}{2048} \right\rfloor, 1 \right)$;

if $M <$ T, the length corresponding to cyclic prefix is $L_c = \max\left( \left\lfloor \mathrm{T} \cdot \dfrac{L_{CP}}{2048} \right\rfloor, 1 \right)$;

where the $L_{CP}$ is the length of cyclic prefix, and the $L_c$ is a calculated window length parameter associated with cyclic prefix.

The step of performing time domain noise reduction on each antenna for each user comprises:
setting tap values outside the effective channel impulse response window corresponding to each user to be 0, and maintaining tap values inside the window to be original time domain channel estimation values, to implement time domain noise reduction of each antenna.

The step of searching for the peak in the effective channel impulse response window for each target user to determine the position of the peak comprises:

calculating a plurality of arithmetic means of channel estimation power of multiple antennas in two timeslots of the user $m$;
searching for a position corresponding to a maximum value among the plurality of arithmetic means within the length of the effective channel impulse response window of the user $m$ to determine the position corresponding to the maximum value, i.e., the position of the peak.

In the step of calculating the time offset estimation value of the user based on the position of the peak:

if the length $M$ of the frequency domain channel estimation value of the user $m$ is greater than or equal to $T$, the time offset estimation value of the user $m$ is:

$$ \mathrm{n}_{\mathrm{TA}}^{(\mathrm{m})} = \begin{cases} \left\lfloor n_{\max}^{(m)} \cdot \dfrac{128}{M} \right\rfloor, & 0 \leq n_{\max}^{(m)} \leq \dfrac{M}{2} \\[4mm] \left\lfloor \left( n_{\max}^{(m)} - M^{(m)} \right) \cdot \dfrac{128}{M^{(m)}} \right\rfloor, & \text{else} \end{cases} $$

if the length $M$ of the frequency domain channel estimation value of the user $m$ is less than $T$, the time offset estimation value of the user $m$ is:

$$ \mathrm{n}_{\mathrm{TA}}^{(\mathrm{m})} = \begin{cases} n_{\max}^{(m)} \cdot \left\lfloor \dfrac{128}{\mathrm{T}} \right\rfloor, & 0 \leq n_{\max}^{(m)} \leq \dfrac{M}{2} \\[4mm] \left( n_{\max}^{(m)} - \mathrm{T} \right) \cdot \left\lfloor \dfrac{128}{\mathrm{T}} \right\rfloor, & \text{else} \end{cases} $$

where $n_{TA}^{(m)}$ is the time offset estimation value, $n_{\max}^{(m)}$ is the position of the peak, $M^{(m)}$ is the length of the frequency domain channel estimation value of the user $m$, and $T$ is the length parameter of channel estimation transforming from frequency domain to time domain.

After the time offset estimation value of the user is calculated, the method further comprises:

generating a command word from the time offset estimation value to report to the a media access control (MAC) layer;

the media access control (MAC) layer notifying, according to the command word, a user equipment (UE) to perform timing adjustment based on the time offset estimation value in the command word; and

a base station compensating for time offset of received data based on the time offset estimation value in the command word.

Also provided is a device for estimating time offset in an orthogonal frequency division multiplexing (OFDM) system comprising:

a pilot bit channel estimation module configured to obtain a pilot bit frequency domain channel estimation value of a target user and transmit the frequency domain channel estimation value to a frequency domain to time domain transformation module;

the frequency domain to time domain transformation module configured to transform the received frequency domain channel estimation value to time domain;

a multi-user separation and noise reduction module configured to perform multi-user separation and multi-antenna noise reduction in time domain on the frequency domain channel estimation value that has been transformed to time domain;

a peak search module configured to search for a peak for each target user separately in time domain to determine a position of the peak; and

a time offset estimation value calculation module configured to calculate a time offset estimation value of the user based on the position of the peak.

The frequency domain to time domain transformation module is further configured to, during frequency domain to time domain transformation, if a length *M* of the frequency domain channel estimation value is greater than or equal to T, transform directly the frequency domain channel estimation value to time domain through inverse Fourier transform; otherwise, extend the obtained frequency domain channel estimation value to the length of *T* to transform to time domain through the inverse Fourier transform, where T is a length parameter of channel estimation transforming from frequency domain to time domain and is a positive integer.

The time offset estimation value calculation module is further configured to, when calculating the time offset estimation value of the user based on the position of the peak, if the length *M* of the frequency domain channel estimation value of the user *m* is greater than or equal to *T,* determine the time offset estimation value of the user *m* to be:

$$
\mathrm{n}_{\mathrm{TA}}^{(m)}=\begin{cases} \left\lfloor n_{\max}^{(m)} \cdot \dfrac{128}{M} \right\rfloor, & 0 \le n_{\max}^{(m)} \le \dfrac{M}{2} \\ \left\lfloor \left(n_{\max}^{(m)} - M^{(m)}\right) \cdot \dfrac{128}{M^{(m)}} \right\rfloor, & else \end{cases}
$$

if the length *M* of the frequency domain channel estimation value of the user *m* is less than *T,* determine the time offset estimation value of the user *m* to be:

$$
\mathrm{n}_{\mathrm{TA}}^{(m)}=\begin{cases} \left\lfloor n_{\max}^{(m)} \cdot \dfrac{128}{M} \right\rfloor, & 0 \le n_{\max}^{(m)} \le \dfrac{M}{2} \\ \left\lfloor \left(n_{\max}^{(m)} - M^{(m)}\right) \cdot \dfrac{128}{M^{(m)}} \right\rfloor, & else \end{cases}
$$

where $n_{TA}^{(m)}$ is the time offset estimation value, $n_{\max}^{(m)}$ is the position of the peak, $M^{(m)}$ is the length of the frequency domain channel estimation value of the user $m$, and $T$ is the length parameter of channel estimation transforming from frequency domain to time domain, and $T \geq 128$.

The device further comprises a time adjustment command generation module configured to generate a command word from the time offset estimation value.

Using the device and method for estimating time offset in accordance with the present invention, relative time offset between a base station and a user equipment can be estimated efficiently. Because a method for time domain multi-user separation is used, this scheme can be used to estimate time offset for a single user or for multiple users. The time offset estimation is implemented in time domain such that the method for calculating time offset is simplified and the complexity of the device is decreased, and a more accurate estimation value can also be obtained at a working point with a low signal-to-noise ratio. This scheme can improve the accuracy of time offset estimation and increase the range of time offset estimation, thereby increasing the precision of uplink synchronization of the UE.

Brief Description of Drawings

FIG. 1 is a position diagram of a pilot signal in a SC-FDMA system;
FIG. 2 is a block diagram of a device for estimating time offset according to a specific embodiment of the present invention; and
FIG. 3 is a flowchart of a method for estimating time offset according to a specific embodiment of the present invention;

Preferred Embodiments of the Present Invention

In order to make objectives, technical schemes and advantages of the present invention more clear, the present invention will be further described in detail below in conjunction with the accompanying drawings.

A device and method for estimating time offset in an OFDM system in accordance with the present invention perform multi-user separation and noise reduction in time domain based on a channel estimation value on pilot, search for a peak in time domain, and calculate time offset estimation of a synchronization command word to provide a more accurate measurement quantity for time offset compensation and time offset report so as to decrease influence of time offset on the performance of a receiver.

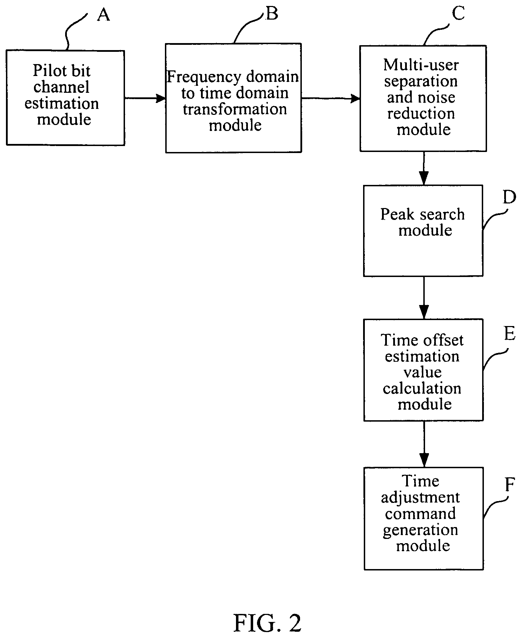

The device for estimating time offset in an orthogonal frequency division multiplexing system, as shown in FIG. 2, comprises a pilot bit channel estimation module A, a frequency domain to time domain transformation module B, a multi-user separation and noise reduction module C, a peak search module D and a time offset estimation value calculation module E.

The pilot bit channel estimation module A is configured to obtain a pilot bit frequency domain channel estimation value of a target user and transmit the frequency domain channel estimation value to the frequency domain to time domain transformation module B.

The frequency domain to time domain transformation module B is configured to transform the received frequency domain channel estimation value to time domain. During the transformation, if the length $M$ of the frequency domain channel estimation value is greater than or equal to $T$ ($T$ is a positive integer, and preferably $T \geq 128$), the frequency domain channel estimation value is directly transformed to time domain through inverse Fourier transform; otherwise, the frequency domain channel estimation value may be extended to the length of $T$ by filling data according to different rules, preferably filling zeros, filled positions being in front of or in back of the frequency domain channel estimation value $H_{k,slot\_i,ka}$ or partially in front of and partially in back of $H_{k,slot\_i,ka}$, and is then transformed to time domain through the inverse Fourier transform, where $T$ is a length parameter of channel estimation transforming from frequency domain to time domain.

The multi-user separation and noise reduction module C is configured to perform multi-user separation and multi-antenna noise reduction in time domain on the frequency domain channel estimation value that has been transformed to time domain. The multi-user separation and noise reduction module C performs multi-user separation and noise reduction by calculating the length of an effective channel impulse response window of the target user.

The peak search module D is configured to search for a peak in the effective channel impulse response window corresponding to the target user for each target user separately in time domain to determine the position of the peak.

The time offset estimation value calculation module E is configured to calculate a time offset estimation value of the user based on the position of the peak.

The device further comprises a time adjustment command generation module F configured to generate a command word from the time offset estimation value.

The specific working modes of the modules A, B, C, D, E, F will be described in detail hereinafter with respect to the method for estimating time offset and will not be described in detail here now.

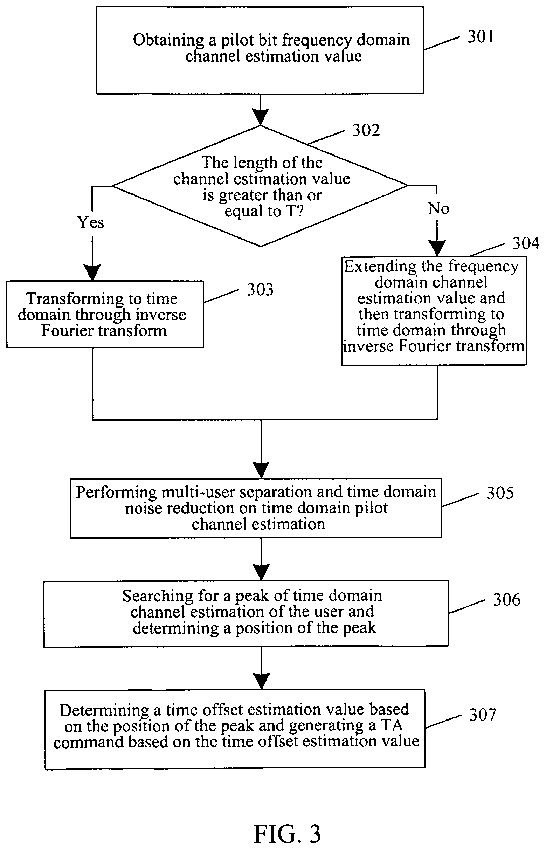

As shown in FIG. 3, based on the above device for estimating time offset, the present invention further provides a method for estimating time offset in an orthogonal frequency division multiplexing system, which comprises the following steps:

Step 301: a pilot bit frequency domain channel estimation value of a target user is obtained as an output value of a channel estimation value calculation module. An optional method will be described now. The pilot bit frequency domain channel estimation value of the target user is obtained by calculating a received frequency domain demodulation reference signal and a local frequency domain demodulation reference signal, that is, the pilot bit frequency domain channel estimation value of the target user is a quotient obtained by dividing the received frequency domain demodulation reference signal by the local frequency domain demodulation reference signal. Of course, the method for obtaining the pilot bit frequency domain channel estimation value of the target user in accordance with the present invention is not limited to the above example, a frequency domain channel estimation value obtained by other methods for calculating channel estimation may also be selected. The length of the pilot channel estimation is $M$.

Steps 302-304: the frequency domain channel estimation value is transformed to time domain, and the magnitude of $M$ is determined. If $M$ is greater than or equal to $T$, the frequency domain channel estimation value is directly transformed to time domain through the inverse Fourier transform; otherwise, the frequency domain channel estimation value obtained in step 301 may be extended to the length of $T$ by filling data according to different rules, preferably filling zeros, filled positions being in front of or in back of the frequency domain channel estimation value $H_{k,slot\_i,ka}$ or partially in front of and partially in back of $H_{k,slot\_i,ka}$, and is then transformed to time domain through the inverse Fourier transform, where $T$ is a length parameter of channel estimation transforming from frequency domain to time domain.

It should be noted that filling zeros is only a preferred mode of the present invention, the frequency domain channel estimation value may be extended to the length of $T$ by filling other data in the present invention, wherein the filled positions may be in front of or in back of the frequency domain channel estimation value $H_{k,slot\_i,ka}$ or partially in front of and partially in back of $H_{k,slot\_i,ka}$.

Step 305: multi-user separation is performed on time domain pilot channel estimation, and time domain noise reduction is implemented on each antenna. Multi-user separation is achieved by calculating the length of the effective channel impulse response window of the target user such that time domain noise reduction can be implemented on each antenna for each user separately.

Step 306: a peak of time domain channel estimation of the user is searched for. For each target user, the peak is searched for in the effective channel impulse response window of the target user to determine the position of the peak.

Step 307: a time adjustment (TA) command is generated. The time offset estimation value of the user is calculated using the position of the peak, and a TA command word is generated.

The method for estimating time offset according to the present invention will be described in detail below in conjunction with two specific examples. Example one involves a general case where $T$ is greater than or equal to 128 and the TA command word is generated using a general formula; and Example two involves a case where $T$ is less than 128 and the formula for generating the TA command word is derived in a simplified way.

Example one:

(101) Firstly, a pilot bit frequency domain channel estimation value of a target user is obtained as an output value of a channel estimation value calculation module. An optional method will be described now. The pilot bit frequency domain channel estimation value of the target user is obtained by calculating a received frequency domain demodulation reference signal and a local frequency domain demodulation reference signal. Of course, the frequency domain channel estimation value obtained by other methods for calculating channel estimation may also be selected. Here, taking a pilot bit frequency domain channel estimation value of the target user obtained by calculating with a received frequency domain demodulation reference signal and a local frequency domain demodulation reference signal as an example. In this Example one, if a frequency domain receiving sequence in a time slot *slot_i* and on an antenna $ka$ is $Y_{k,slot\_i,ka}$, and a local frequency domain pilot code is $X_k$, then the pilot bit frequency domain channel estimation value $H_{k,slot\_i,ka}$ is shown as follows:

$$H_{k,slot\_i,ka} = \frac{Y_{k,slot\_i,ka}}{X_k} = a_{k,slot\_i,ka} e^{j\phi_{k,slot\_i,ka}}, \quad 1 \leq k \leq M.$$

(102) The magnitude of the length $M$ of the pilot bit frequency domain channel estimation value is determined, and channel estimation is transformed from frequency domain to time domain based on the magnitude of $M$ according to the following rules:

If $M$ is greater than or equal to $T$, the frequency domain channel estimation value is directly transformed to time domain through the inverse Fourier transform, i.e., $h_{n,slot\_i,ka} = \text{IDFT}_M[H_{k,slot\_i,ka}]$; herein, $T$ is a length parameter of channel estimation transforming from frequency domain to time domain, and $T$ is a positive integer and $T \geq 128$.
If $M$ is less than $T$, the frequency domain channel estimation value $H_{k,slot\_i,ka}$ is extended to the length of $T$ by filling data according to different rules, preferably filling zeros; the filled positions may be in front of or in back of the frequency domain channel estimation value $H_{k,slot\_i,ka}$ or partially in front of and partially in back of $H_{k,slot\_i,ka}$. In this example, the length is reached to $T$ by filling zeros at the end of the frequency domain channel estimation value, and the frequency domain channel estimation value which is expended to the length of $T$ by filling zeros is transformed to time domain through the inverse Fourier transform, i.e.,

$$\overline{H}_{k,slot\_i,ka} = \left[ \underbrace{H_{k,slot\_i,ka} \quad 0 \quad \cdots \quad 0}_{T} \right]$$

$$h_{n,slot\_i,ka} = \text{IDFT}_T\left[ \overline{H}_{k,slot\_i,ka} \right]$$

(103) Multi-user separation and time domain noise reduction are performed on pilot channel estimation.

There is channel estimation for multiple users on the time domain sequence $h_{n,slot\_i,ka}$, and the number of the multiple users is set to be K_User. For a user $m$, a reference position of a time domain window of the target user is firstly determined, and then $L_{fore}$ points in front of the reference position and $L_{psot}$ points in back of the reference position are determined.

Therefore, for this user $m$, the reference position of its window is determined as the position of a cyclic shift number $Index_{(m)} = \dfrac{\alpha_{(m)} * M}{2\pi}$ of the user relative to a mother code, and ($L_{fore} + L_{post}$) sample points of left and right windows starting from this reference position are the length of the channel estimation window of the user $m$, where $\alpha_{(m)}$ represents a cyclic shift parameter of the user $m$ relative to the mother code configured in a high layer, $M$ is the length of the frequency domain pilot channel estimation of the user $m$, $1 \leq m \leq K\_User$.

After the reference position is determined, the length $L_w$ of the effective channel impulse response window of the target user is calculated.

For the user $m$, if $M \geq T$, the length corresponding to cyclic prefix (CP) is:

$$L_c = \max\left( \left\lfloor M \cdot \frac{L_{CP}}{2048} \right\rfloor, 1 \right)$$

if $M < T$, the length corresponding to cyclic prefix (CP) is:

$$L_c = \max\left( \left\lfloor T \cdot \frac{L_{CP}}{2048} \right\rfloor, 1 \right)$$

$L_{CP}$ is a the length of CP with unit being Ts given in the 3Gpp 36.211 protocol, and $L_c$ is a calculated window length parameter corresponding to CP.

The total length of the time domain channel estimation window of the user $m$ is $L_w$, wherein the effective window length $L_w$ includes two portions, front window length and rear window length, the front window length being $L_{fore} = \lambda_f L_c$ and the rear window length being $L_{post} = \lambda_p L_c$, where $\lambda_f$ and $\lambda_p$ are window width adjustment factors and can be configured. The total length $L_w$ of the time domain channel estimation window of the user m is:

$$L_w = L_{fore} + L_{post};$$

Then tap values are processed according to the time domain channel estimation window after the window is determined, to implement time domain noise reduction for each antenna:

$$h'^{(m)}_{n,slot\_i,ka} = \begin{cases} h_{n,slot\_i,ka} & \text{tap values inside the window of the user m} \\ 0 & \text{tap values outside the window of the user m} \end{cases}$$

where $h'^{(m)}_{n,slot\_i,ka}$ is a time domain channel estimation value for implementing time domain noise reduction by processing the tap values, $h_{n,slot\_i,ka}$ is a time domain channel estimation value of the user. It is indicated in the above formula that tap values inside the window are maintained to be the original values, and tap values outside the window are all set to be 0. Through the tap noise reduction described above, the time domain channel estimation value of the user only occurs in the corresponding channel estimation window.

(104) A peak for the user $m$ is searched for, and arithmetic means of channel estimation power of a plurality of antennas in two timeslots of the user m is calculated by:

$$\tilde{h}^{(m)}(n) = \frac{1}{2 \cdot K_a} \cdot \sum_{k_a=0}^{K_a-1} \sum_{slot\_i=0}^{1} \left| h'^{(m)}_{n,slot\_i,ka} \right|^2$$

(105) For the user $m$, the position corresponding to the maximum value is searched for within the length of the time domain channel estimation window: $n_{\max}^{(m)} = \arg_{n \in L_w^{(m)}} \left\{ \max \left[ \tilde{h}^{(m)}(n) \right] \right\}$, where arg () represents a position calculating function.

(106) The time adjustment (TA) command of the user $m$ is generated. Firstly, the time offset estimation value of the user $m$ is required to be determined.

For the user $m$, if $M \geq T$, the time offset estimation value is:

$$n_{TA}^{(m)} = \begin{cases} \left\lfloor n_{\max}^{(m)} \cdot \dfrac{128}{M} \right\rfloor, & 0 \leq n_{\max}^{(m)} \leq \dfrac{M}{2} \\ \left\lfloor \left( n_{\max}^{(m)} - M^{(m)} \right) \cdot \dfrac{128}{M^{(m)}} \right\rfloor, & \text{else} \end{cases}$$

if $M < T$, the time offset estimation value is:

$$n_{TA}^{(m)} = \begin{cases} n_{max}^{(m)} \cdot \left\lfloor \dfrac{128}{T} \right\rfloor, & 0 \le n_{max}^{(m)} \le \dfrac{M}{2} \\[3mm] (n_{max}^{(m)} - T) \cdot \left\lfloor \dfrac{128}{T} \right\rfloor, & \text{else} \end{cases}$$

where the unit of $n_{TA}^{(m)}$ is 16Ts, and Ts is defined in 36.211 of the 3Gpp protocol.

(107) The estimated $n_{TA}^{(m)}$ is used to compensate for time offset, or is reported to the MAC such that the MAC notifies the UE to make timing adjustment. An adjustment command word of TA generated in a physical layer may be reported to the MAC layer, and the MAC layer sends it to the UE after adding a TA command word such that the UE adjusts the time of transmitting data, or the estimated result may also be used to compensate for time offset of the received data in the physical layer.

Example two:

(201) A pilot bit frequency domain channel estimation value of a target user is obtained as an output value of a channel estimation value calculation module. An optional method will be described now. The pilot bit frequency domain channel estimation value of the target user is obtained by calculating a received frequency domain demodulation reference signal and a local frequency domain demodulation reference signal. Of course, the frequency domain channel estimation value obtained by other methods for calculating channel estimation may also be selected. Here, taking a pilot bit frequency domain channel estimation value of the target user obtained by calculating with a received frequency domain demodulation reference signal and a local frequency domain demodulation reference signal as an example. If a frequency domain receiving sequence in a time slot *slot_i* and on an antenna *ka* is $Y_{k,slot\_i,ka}$, and a local frequency domain pilot code is $X_k$, then the pilot bit frequency domain channel estimation value $H_{k,slot\_i,ka}$ is shown as follows:

$$H_{k,slot\_i,ka} = \frac{Y_{k,slot\_i,ka}}{X_k} = a_{k,slot\_i,ka} e^{j\phi_{k,slot\_i,ka}}, \quad 1 \le k \le M.$$

(202) The magnitude of the length *M* of the pilot bit frequency domain channel estimation value is determined, and channel estimation is transformed from frequency domain to time domain based on the magnitude of *M* according to the following rules:

Setting T = 128, *T* is a length parameter of channel estimation transforming from frequency domain to time domain. If *M* is greater than or equal to 128, the frequency domain channel estimation value is directly transformed to time domain through the inverse Fourier transform, i.e.,

$$h_{n,slot\_i,ka} = \text{IDFT}_M \left[ H_{k,slot\_i,ka} \right]$$

If *M* is less than 128, the frequency domain channel estimation value $H_{k,slot\_i,ka}$ may be extended by filling data according to different rules, preferably filling zero; the filled positions may be in front of or in back of the frequency domain channel estimation value $H_{k,slot\_i,ka}$ or partially in front of and partially in back of $H_{k,slot\_i,ka}$. In this example, the length is reached to 128 by filling zeros at the end of the frequency domain channel estimation value, and the frequency domain channel estimation value which is expanded to the length of 128 by filling zeros is transformed to time domain through the inverse Fourier transform, i.e.,

$$\overline{\overline{H}}_{k,slot\_i,ka} = \left[ \underbrace{H_{k,slot\_i,ka} \quad 0 \quad \dots \quad 0}_{128} \right]$$

$$h_{n,slot\_i,ka} = \mathrm{IDFT}_{128}\left[\overline{H}_{k,slot\_i,ka}\right]$$

(203) Multi-user separation and time domain noise reduction are performed on pilot channel estimation.

There is channel estimation for multiple users on the time domain sequence $h_{n,slot\_i,ka}$, and the number of the multiple users is set to be K_User. For a user $m$, a reference position of a time domain window of the target user is firstly determined, and then $L_{fore}$ points in front of the reference position and $L_{psot}$ points in back of the reference position are determined. For this user $m$, the reference position of its window is determined as the position of a cyclic shift number

$$Index_{(m)} = \frac{\alpha_{(m)} * M}{2\pi}$$ of the user relative to a mother code, and $(L_{fore} + L_{post})$ sample points of left and right windows starting from this reference position are the length of the channel estimation window of the user $m$, where $\alpha_{(m)}$ represents a cyclic shift parameter of the user $m$ relative to the mother code configured in a high layer, $M$ is the length of the frequency domain pilot channel estimation of the user $m$, $1 \leq m \leq K\_User$.

After the reference position is determined, the length $L_w$ of the effective channel impulse response window of the target user is calculated.

For the user m, if $M \geq 128$, the length corresponding to cyclic prefix (CP) is:

$$L_c = \max\left(\left\lfloor M \cdot \frac{L_{CP}}{2048}\right\rfloor, 1\right)$$

if $M < 128$, the length corresponding to cyclic prefix (CP) is:

$$L_c = \max\left(\left\lfloor 128 \cdot \frac{L_{CP}}{2048}\right\rfloor, 1\right) = \max\left(\left\lfloor \frac{L_{CP}}{16}\right\rfloor, 1\right)$$

$L_{CP}$ is the length of CP with unit being Ts given in the 3Gpp 36.211 protocol, and $L_c$ is a calculated window length parameter corresponding to CP.

The total length of the time domain channel estimation window of the user $m$ is $L_w$, wherein the effective window length $L_w$ includes two portions, front window length and rear window length, the front window length being $L_{fore} = \lambda_f L_c$ and the rear window length being $L_{post} = \lambda_p L_c$, where $\lambda_f$ and $\lambda_p$ are window width adjustment factors and can be configured. The total length $L_w$ of the time domain channel estimation window of the user $m$ is:

$$L_w = L_{fore} + L_{post};$$

Then tap values are processed according to the time domain channel estimation window after the window is determined, to implement time domain noise reduction for each antenna:

$$h^{'(m)}_{n,slot\_i,ka} = \begin{cases} h_{n,slot\_i,ka} & \text{tap values inside the window of the user m} \\ 0 & \text{tap values outside the window of the user m} \end{cases}$$

where $h^{'(m)}_{n,slot\_i,ka}$ is a time domain channel estimation value for implementing time domain noise reduction by processing the tap values, $h_{n,slot\_i,ka}$ is a time domain channel estimation value of the user. It is indicated in the above formula that tap values inside the window are maintained to be the original values, and tap values outside the window are all set to be 0. Through the tap noise reduction described above, the time domain channel estimation value of the user only occurs in the corresponding channel estimation window.

(204) A peak for the user *m* is searched for, and arithmetic means of channel estimation power of a plurality of antennas in two timeslots of the user m is calculated by:

$$\tilde{h}^{(m)}(n) = \frac{1}{2 \cdot K_a} \cdot \sum_{k_a=0}^{K_a-1} \sum_{slot\_i=0}^{1} \left| h_{n,slot\_i,ka}^{'(m)} \right|^2$$

(205) For the user *m,* the position corresponding to the maximum value is searched for within the length of the time domain channel estimation window: $n_{\max}^{(m)} = \underset{n \in L_w^{(m)}}{\arg} \left\{ \max \left[ \tilde{h}^{(m)}(n) \right] \right\}$ , where arg () represents a position calculating function.

(206) The time adjustment (TA) command of the user *m* is generated. Firstly, the time offset estimation value of the user *m* is required to be determined.

For a user m, if $M \geq 128$, the time offset estimation value is:

$$n_{\mathrm{TA}}^{(m)} = \begin{cases} \left\lfloor n_{\max}^{(m)} \cdot \dfrac{128}{M} \right\rfloor, & 0 \leq n_{\max}^{(m)} \leq \dfrac{M}{2} \\ \left\lfloor \left( n_{\max}^{(m)} - M^{(m)} \right) \cdot \dfrac{128}{M^{(m)}} \right\rfloor, & \text{else} \end{cases}$$

if $M < 128$, the time offset estimation value is:

$$n_{TA}^{(m)} = \begin{cases} n_{\max}^{(m)}, & 0 \leq n_{\max}^{(m)} \leq \dfrac{M}{2} \\ n_{\max}^{(m)} - 128, & \text{else} \end{cases}$$

where the unit of $n_{TA}^{(m)}$ is 16Ts, and Ts is defined in 36.211 of the 3Gpp protocol.

(207) The estimated $n_{TA}^{(m)}$ is used to compensate for time offset, or is reported to the MAC such that the MAC notifies the UE to make timing adjustment. An adjustment command word of TA generated in a physical layer may be reported to the MAC layer, and the MAC layer sends it to the UE after adding a TA command word such that the UE adjusts the time of transmitting data, or the estimated result may also be used to compensate for time offset of the received data in the physical layer.

The present invention is applicable to the OFDM system. The above description is the embodiment of the present invention only, and is not intended to limit the scope of the present invention as defined by the appended claims.

## Claims

1. A method for estimating symbol time offset in an orthogonal frequency division multiplexing, OFDM, system comprising the following steps of:

   obtaining (301) a pilot bit frequency domain channel estimation value of multiple users;
   transforming (303, 304) the obtained pilot bit frequency domain channel estimation value to time domain, thus obtaining a time domain channel estimation value;
   **characterized by**
   performing (305) multi-user separation and noise reduction for each receive antenna and for each user in time domain on the time domain channel estimation value;

searching (306), within a length of a time domain channel estimation window, for a peak for each user separately in time domain to determine a position of the peak; and

calculating (307) a symbol time offset estimation value of each user based on the position of the peak.

2. The method according to claim 1, wherein
the pilot bit frequency domain channel estimation value of the user is a quotient obtained by dividing a received frequency domain demodulation reference signal by a local frequency domain demodulation reference signal.

3. The method according to claim 1, wherein
a length of the pilot bit frequency domain channel estimation value of the user is $M$,
in the step of transforming the obtained pilot bit frequency domain channel estimation value to time domain:

if $M$ is greater than or equal to $T$, the frequency domain channel estimation value is directly transformed to time domain through an inverse Fourier transform;
if $M$ is less than $T$, the obtained frequency domain channel estimation value is extended to the length of $T$ and is then transformed to time domain through the inverse Fourier transform;
where T is a length parameter of channel estimation transforming from frequency domain to time domain, and is a positive integer.

4. The method according to claim 3, wherein the obtained frequency domain channel estimation value is extended to the length of T means that:
the frequency domain channel estimation value is extended to the length of $T$ by filling zeros, and filled positions are in front of or in back of the frequency domain channel estimation value, or partially in front of and partially in back of the frequency domain channel estimation value.

5. The method according to claim 1, wherein the length of the time domain channel estimation window of each user is calculated in the following way:

determining a reference position of the time domain channel estimation window of a user $m$ in a time domain sequence;
determining a front window length $L_{fore} = \lambda_f L_c$ and a rear window length $L_{post} = \lambda_p L_c$ of the reference position based on a calculated window length parameter $L_c$ associated with cyclic prefix, CP, where $\lambda_f$ and $\lambda_p$ are window width adjustment factors;
adding the front window length and the rear window length to obtain the length of the time domain channel estimation window: $L_w = L_{fore} + L_{post}$.

6. The method according to claim 5, wherein
$L_c$ is determined based on a relative relationship between the length $M$ of the frequency domain channel estimation value of the user $m$ and the length parameter $T$ of the channel estimation transforming from frequency domain to time domain, specifically:

if $M \geq T$, the length corresponding to cyclic prefix is $L_c = \max\left(\left\lfloor M \cdot \dfrac{L_{CP}}{2048} \right\rfloor, 1\right)$;

if $M < T$, the length corresponding to cyclic prefix is $L_c = \max\left(\left\lfloor T \cdot \dfrac{L_{CP}}{2048} \right\rfloor, 1\right)$;

where the $L_{CP}$ is the length of cyclic prefix.

7. The method according to claim 1, wherein the step of performing noise reduction for each receive antenna and for each user in time domain on the time domain channel estimation value comprises:
setting tap values outside the time domain channel estimation window corresponding to each user to be 0, and maintaining tap values inside the window to be original time domain channel estimation values, to implement time domain noise reduction of each antenna.

8. The method according to claim 1, wherein the step of searching for the peak for each user separately in time domain to determine the position of the peak comprises:

calculating a plurality of arithmetic means of channel estimation power of multiple antennas in two timeslots of the user *m*;
searching for a position corresponding to a maximum value among the plurality of arithmetic means within the length of the time domain channel estimation window of the user *m* to determine the position corresponding to the maximum value, i.e., the position of the peak.

9. The method according to claim 1, wherein in the step of calculating the symbol time offset estimation value of each user based on the position of the peak:

if the length *M* of the frequency domain channel estimation value of the user *m* is greater than or equal to *T*, the symbol time offset estimation value of the user *m* is:

$$
\mathrm{n}_{\mathrm{TA}}^{(m)}=
\begin{cases}
\left\lfloor n_{\max}^{(m)} \cdot \dfrac{128}{M} \right\rfloor, & 0 \le n_{\max}^{(m)} \le \dfrac{M}{2} \\[3mm]
\left\lfloor \left(n_{\max}^{(m)} - M^{(m)}\right) \cdot \dfrac{128}{M^{(m)}} \right\rfloor, & \text{else}
\end{cases}
$$

if the length *M* of the frequency domain channel estimation value of the user *m* is less than *T*, the symbol time offset estimation value of the user *m* is:

$$
\mathrm{n}_{\mathrm{TA}}^{(m)}=
\begin{cases}
n_{\max}^{(m)} \cdot \left\lfloor \dfrac{128}{\mathrm{T}} \right\rfloor, & 0 \le n_{\max}^{(m)} \le \dfrac{M}{2} \\[3mm]
(n_{\max}^{(m)} - \mathrm{T}) \cdot \left\lfloor \dfrac{128}{\mathrm{T}} \right\rfloor, & \text{else}
\end{cases}
$$

where $n_{TA}^{(m)}$ is the symbol time offset estimation value, $n_{\max}^{(m)}$ is the position of the peak, $M^{(m)}$ is the length of the frequency domain channel estimation value of the user *m*, and *T is* the length parameter of channel estimation transforming from frequency domain to time domain.

10. The method according to claim 1, wherein after the symbol time offset estimation value of each user is calculated, the method further comprises:

generating a command word from the symbol time offset estimation value to report to the a media access control (MAC) layer;
the media access control (MAC) layer notifying, according to the command word, a user equipment (UE) to perform timing adjustment based on the symbol time offset estimation value in the command word; and
a base station compensating for symbol time offset of received data based on the symbol time offset estimation value in the command word.

11. A device for estimating symbol time offset in an orthogonal frequency division multiplexing, OFDM, system comprising:

a pilot bit channel estimation module (A) configured to obtain a pilot bit frequency domain channel estimation value of multiple users and to transmit the frequency domain channel estimation value to a frequency domain to time domain transformation module (B);
the frequency domain to time domain transformation module (B) configured to transform the obtained frequency domain channel estimation value to time domain, thus obtaining a time domain channel estimation;
**characterized by**
a multi-user separation and noise reduction module (C) configured to perform multi-user separation and noise reduction for each receive antenna and for each user in time domain on the time domain channel estimation value;
a peak search module (D) configured to search, within a length of a time domain channel estimation window, for a peak for each user separately in time domain to determine a position of the peak; and
a symbol time offset estimation value calculation module (E) configured to calculate a symbol time offset estimation value of each user based on the position of the peak.

12. The device according to claim 11, wherein
the frequency domain to time domain transformation module is further configured to, during frequency domain to time domain transformation, if a length $M$ of the frequency domain channel estimation value is greater than or equal to $T$, transform directly the frequency domain channel estimation value to time domain through inverse Fourier transform; otherwise, extend the obtained frequency domain channel estimation value to the length of $T$ to transform to time domain through the inverse Fourier transform, where $T$ is a length parameter of channel estimation transforming from frequency domain to time domain and is a positive integer.

13. The device according to claim 11, wherein the symbol time offset estimation value calculation module is further configured to, when calculating the symbol time offset estimation value of each user based on the position of the peak, if the length $M$ of the frequency domain channel estimation value of the user $m$ is greater than or equal to $T$, determine the symbol time offset estimation value of the user $m$ to be:

$$
\mathrm{n}_{\mathrm{TA}}^{(m)} = \begin{cases} \left\lfloor n_{\max}^{(m)} \cdot \dfrac{128}{M} \right\rfloor, & 0 \le n_{\max}^{(m)} \le \dfrac{M}{2} \\[2ex] \left\lfloor \left( n_{\max}^{(m)} - M^{(m)} \right) \cdot \dfrac{128}{M^{(m)}} \right\rfloor, & else \end{cases}
$$

if the length $M$ of the frequency domain channel estimation value of the user $m$ is less than $T$, determine the symbol time offset estimation value of the user $m$ to be:

$$
\mathrm{n}_{\mathrm{TA}}^{(m)} = \begin{cases} \left\lfloor n_{\max}^{(m)} \cdot \dfrac{128}{M} \right\rfloor, & 0 \le n_{\max}^{(m)} \le \dfrac{M}{2} \\[2ex] \left\lfloor \left( n_{\max}^{(m)} - M^{(m)} \right) \cdot \dfrac{128}{M^{(m)}} \right\rfloor, & else \end{cases}
$$

where $n_{TA}^{(m)}$ is the symbol time offset estimation value, $n_{\max}^{(m)}$ is the position of the peak, $M^{(m)}$ is the length of the frequency domain channel estimation value of the user $m$, and $T$ is the length parameter of channel estimation transforming from frequency domain to time domain, and $T \ge 128$.

14. The device according to claim 11, 12 or 13, wherein the device further comprises a time adjustment command generation module (F) configured to generate a command word from the symbol time offset estimation value.


**Patentansprüche**

1. Verfahren zum Schätzen eines Symbolzeitversatzes in einem orthogonalen Frequenzmultiplexsystem, OFDM-System, das die folgenden Schritte umfasst, dass:

ein Schätzwert eines Pilotbit-Frequenzbereichskanals von mehreren Nutzern beschafft wird (301);
der beschaffte Schätzwert des Pilotbit-Frequenzbereichskanals in den Zeitbereich transformiert wird (303, 304), wodurch ein Schätzwert eines Zeitbereichkanals beschafft wird;
**dadurch gekennzeichnet, dass**
eine Trennung mehrerer Nutzer und eine Rauschreduktion für jede Empfangsantenne und für jeden Nutzer im Zeitbereich an dem Schätzwert des Zeitbereichskanals ausgeführt wird (305);
innerhalb einer Länge eines Schätzfensters des Zeitbereichkanals nach einem Spitzenwert separat für jeden Nutzer im Zeitbereich gesucht wird (306), um eine Position des Spitzenwerts zu bestimmen; und

ein Schätzwert des Symbolzeitversatzes von jedem Nutzer beruhend auf der Position des Spitzenwerts berechnet wird (307).

2. Verfahren nach Anspruch 1, wobei
der Schätzwert des Pilotbit-Frequenzbereichskanals des Nutzers ein Quotient ist, der beschafft wird, indem ein empfangenes Demodulationsreferenzsignal im Frequenzbereich durch ein lokales Demodulationsreferenzsignal im Frequenzbereich dividiert wird.

3. Verfahren nach Anspruch 1, wobei
eine Länge des Schätzwerts des Pilotbit-Frequenzbereichskanals des Nutzers M ist,
in dem Schritt des Transformierens des beschafften Schätzwerts des Pilotbit-Frequenzbereichskanals in den Zeitbereich:

wenn M größer oder gleich T ist, der Schätzwert des Frequenzbereichskanals durch eine inverse Fouriertransformation direkt in den Zeitbereich transformiert wird;
wenn M kleiner als T ist, der beschaffte Schätzwert des Frequenzbereichskanals auf die Länge von T vergrößert wird und dann durch die inverse Fouriertransformation in den Zeitbereich transformiert wird;
wobei T ein Längenparameter einer Kanalschätzungstransformation aus dem Frequenzbereich in den Zeitbereich ist und eine positive ganze Zahl ist.

4. Verfahren nach Anspruch 3,
wobei der beschaffte Schätzwert des Frequenzbereichskanals auf die Länge von T vergrößert wird mit Hilfe von:
der Schätzwert des Frequenzbereichskanals wird auf die Länge von T vergrößert, indem Nullen aufgefüllt werden, und aufgefüllte Positionen sich vor oder hinter dem Schätzwert des Frequenzbereichskanals oder teilweise vor und teilweise hinter dem Schätzwert des Frequenzbereichskanals befinden.

5. Verfahren nach Anspruch 1,
wobei die Länge des Schätzfensters des Zeitbereichskanals von jedem Nutzer auf folgende Weise berechnet wird:

Bestimmen einer Referenzposition des Schätzfensters des Zeitbereichskanals eines Nutzers m in einer Zeitbereichssequenz;
Bestimmen der Länge eines vorderen Fensters $L_{fore} = \lambda_f L_c$ und der Länge eines hinteren Fensters $L_{post} = \lambda_P L_c$ der Referenzposition auf der Grundlage eines berechneten Fensterlängenparameters $L_c$, der einem zyklischen Präfix CP zugeordnet ist, wobei $\lambda_f$ und $\lambda_p$ Faktoren zur Justierung der Fensterbreite sind;
Addieren der Länge des vorderen Fensters und der Länge des hinteren Fensters, um die Länge des Schätzfensters des Zeitbereichskanals zu beschaffen: $L_w = L_{fore} + L_{post}$.

6. Verfahren nach Anspruch 5, wobei
$L_c$ auf der Grundlage einer relativen Beziehung zwischen der Länge M des Schätzwerts des Frequenzbereichskanals des Nutzers m und dem Längenparameter T der Kanalschätzungstransformation aus dem Frequenzbereich in den Zeitbereich bestimmt wird, speziell:

wenn $M \geq T$ ist die Länge, die dem zyklischen Präfix entspricht

$$L_c = \max\left( \left\lfloor M \cdot \frac{L_{CP}}{2048} \right\rfloor, 1 \right)$$

wenn $M < T$ ist die Länge, die dem zyklischen Präfix entspricht

$$L_c = \max\left( \left\lfloor T \cdot \frac{L_{CP}}{2048} \right\rfloor, 1 \right)$$

wobei $L_{CP}$ die Länge des zyklischen Präfix ist.

**7.** Verfahren nach Anspruch 1,
wobei der Schritt des Ausführens einer Rauschreduktion für jede Empfangsantenne und für jeden Nutzer im Zeitbereich an dem Schätzwert des Zeitbereichskanals umfasst, dass:
Abgriffswerte außerhalb des Schätzfensters des Zeitbereichskanals entsprechend so eingerichtet werden, dass jeder Nutzer Null ist, und Abgriffswerte innerhalb des Fensters so beibehalten werden, dass sie ursprüngliche Schätzwerte des Zeitbereichskanals sind, um die Rauschreduktion jeder Antenne im Zeitbereich zu implementieren.

**8.** Verfahren nach Anspruch 1,
wobei der Schritt des Suchens nach dem Spitzenwert für jeden Nutzer separat im Zeitbereich, um die Position des Spitzenwerts zu bestimmen, umfasst, dass:

eine Vielzahl arithmetischer Mittelwerte einer Kanalschätzleistung von mehreren Antennen in zwei Zeitfenstern des Nutzers m berechnet wird;
nach einer Position gesucht wird, die einem Maximalwert unter der Vielzahl von arithmetischen Mittelwerten innerhalb der Länge des Schätzfensters des Zeitbereichskanals des Nutzers m entspricht, um die Position zu bestimmen, die dem Maximalwert entspricht, d.h. die Position des Spitzenwerts.

**9.** Verfahren nach Anspruch 1,
wobei in dem Schritt des Berechnens des Schätzwerts des Symbolzeitversatzes von jedem Nutzer auf der Grundlage der Position des Spitzenwerts:

wenn die Länge M des Schätzwerts des Frequenzbereichskanals des Nutzers m größer oder gleich T ist, ist der Schätzwert des Symbolzeitversatzes des Nutzers m:

$$n_{\text{TA}}^{(m)} = \begin{cases} \left\lfloor n_{\max}^{(m)} \cdot \dfrac{128}{M} \right\rfloor, & 0 \le n_{\max}^{(m)} \le \dfrac{M}{2} \\[2em] \left\lfloor \left( n_{\max}^{(m)} - M^{(m)} \right) \cdot \dfrac{128}{M^{(m)}} \right\rfloor, & sonst \end{cases}$$

wenn die Länge M des Schätzwerts des Frequenzbereichskanals des Nutzers m kleiner als T ist, ist der Schätzwert des Symbolzeitversatzes des Nutzers m:

$$n_{\text{TA}}^{(m)} = \begin{cases} n_{\max}^{(m)} \cdot \left\lfloor \dfrac{128}{T} \right\rfloor, & 0 \le n_{\max}^{(m)} \le \dfrac{M}{2} \\[2em] (n_{\max}^{(m)} - T) \cdot \left\lfloor \dfrac{128}{T} \right\rfloor, & sonst \end{cases}$$

wobei $n_{TA}^{(m)}$ der Schätzwert des Symbolzeitversatzes ist, $n_{\max}^{(m)}$ die Position des Spitzenwerts ist, M^(m) die Länge des Schätzwerts des Frequenzbereichskanals des Nutzers m ist und T der Längenparameter der Kanalschätzungstransformation aus dem Frequenzbereich in den Zeitbereich ist.

**10.** Verfahren nach Anspruch 1,
wobei, nachdem der Schätzwert des Symbolzeitversatzes von jedem Nutzer berechnet ist, das Verfahren ferner umfasst, dass:

ein Befehlswort aus dem Schätzwert des Symbolzeitversatzes zum Berichten an eine Medienzugriffssteuerungsschicht (MAC-Schicht) erzeugt wird;
die Medienzugriffssteuerungsschicht (MAC-Schicht) in Übereinstimmung mit dem Befehlswort ein Nutzergerät (UE) benachrichtigt, damit es eine Zeitjustierung auf der Grundlage des Schätzwerts des Symbolzeitversatzes in dem Befehlswort ausführt; und

eine Basisstation einen Symbolzeitversatz von empfangenen Daten auf der Grundlage des Schätzwerts des Symbolzeitversatzes in dem Befehlswort kompensiert.

11. Vorrichtung zum Schätzen eines Symbolzeitversatzes in einem orthogonalen Frequenzmultiplexsystem, OFDM-System, umfassend:

ein Pilotbit-Kanalschätzmodul (A), das ausgestaltet ist, um einen Schätzwert eines Pilotbit-Frequenzbereichskanals von mehreren Nutzern zu beschaffen und um den Schätzwert des Frequenzbereichskanals an ein Transformationsmodul (B) aus dem Frequenzbereich in den Zeitbereich zu übertragen;

wobei das Transformationsmodul (B) aus dem Frequenzbereich in den Zeitbereich ausgestaltet ist, um den beschafften Schätzwert des Frequenzbereichskanals in den Zeitbereich zu transformieren, wodurch eine Zeitbereich-Kanalschätzung beschafft wird;

**gekennzeichnet durch**

ein Modul (C) zur Trennung mehrerer Nutzer und zur Rauschreduktion, das ausgestaltet ist, um eine Trennung mehrerer Nutzer und eine Rauschreduktion für jede Empfangsantenne und für jeden Nutzer im Zeitbereich an dem Schätzwert des Zeitbereichskanals auszuführen;

ein Spitzenwertsuchmodul (D), das ausgestaltet ist, um innerhalb einer Länge eines Schätzfensters des Zeitbereichskanals nach einem Spitzenwert separat für jeden Nutzer im Zeitbereich zu suchen, um eine Position des Spitzenwerts zu bestimmen; und

ein Modul (E) zum Berechnen eines Schätzwerts des Symbolzeitversatzes, das ausgestaltet ist, um einen Schätzwert des Symbolzeitversatzes von jedem Nutzer auf der Grundlage der Position des Spitzenwerts zu berechnen.

12. Vorrichtung nach Anspruch 11, wobei

das Transformationsmodul aus dem Frequenzbereich in den Zeitbereich ferner ausgestaltet ist, um während einer Transformation aus dem Frequenzbereich in den Zeitbereich, wenn eine Länge M des Schätzwerts des Frequenzbereichskanals größer oder gleich T ist, den Schätzwert des Frequenzbereichskanals durch eine inverse Fouriertransformation direkt in den Zeitbereich zu transformieren; andernfalls den beschafften Schätzwert des Frequenzbereichskanals auf die Länge von T zu vergrößern, zur Transformation durch die inverse Fouriertransformation in den Zeitbereich, wobei T ein Längenparameter einer Kanalschätzungstransformation aus dem Frequenzbereich in den Zeitbereich ist und eine positive ganze Zahl ist.

13. Vorrichtung nach Anspruch 11,

wobei das Modul zum Berechnen eines Schätzwerts des Symbolzeitversatzes ferner ausgestaltet ist, um, wenn der Schätzwert des Symbolzeitversatzes von jedem Nutzer auf der Grundlage der Position des Spitzenwerts berechnet wird,

wenn die Länge M des Schätzwerts des Frequenzbereichskanals des Nutzers m größer oder gleich T ist, den Schätzwert des Symbolzeitversatzes des Nutzers m so zu bestimmen, dass:

$$n_{TA}^{(m)} = \begin{cases} \left\lfloor n_{max}^{(m)} \cdot \dfrac{128}{M} \right\rfloor, & 0 \le n_{max}^{(m)} \le \dfrac{M}{2} \\ \left\lfloor \left( n_{max}^{(m)} - M^{(m)} \right) \cdot \dfrac{128}{M^{(m)}} \right\rfloor, & sonst \end{cases}$$

wenn die Länge M des Schätzwerts des Frequenzbereichskanals des Nutzers m kleiner als T ist, den Schätzwert des Symbolzeitversatzes des Nutzers m so zu bestimmen, dass:

$$n_{TA}^{(m)} = \begin{cases} \left\lfloor n_{max}^{(m)} \cdot \dfrac{128}{M} \right\rfloor, & 0 \le n_{max}^{(m)} \le \dfrac{M}{2} \\ \left\lfloor \left( n_{max}^{(m)} - M^{(m)} \right) \cdot \dfrac{128}{M^{(m)}} \right\rfloor, & sonst \end{cases}$$

wobei $n_{TA}^{(m)}$ der Schätzwert des Symbolzeitversatzes ist, $n_{max}^{(m)}$ die Position des Spitzenwerts ist, M$^{(m)}$ die Länge des Schätzwerts des Frequenzbereichskanals des Nutzers m ist und T der Längenparameter einer Kanalschätzungstransformation aus dem Frequenzbereich in den Zeitbereich ist, und T ≥ 128.

**14.** Vorrichtung nach Anspruch 11, 12 oder 13,
wobei die Vorrichtung ferner ein Zeitjustierungs-Befehlerzeugungsmodul (F) umfasst, das ausgestaltet ist, um ein Befehlswort aus dem Schätzwert des Symbolzeitversatzes zu erzeugen.

## Revendications

**1.** Procédé d'estimation d'un décalage temporel de symbole dans un système de multiplexage par répartition orthogonale de la fréquence, OFDM, comprenant les étapes suivantes consistant à :

obtenir (301) une valeur d'estimation de canal de domaine fréquentiel de bit pilote de multiples utilisateurs ;
transformer (303, 304) la valeur d'estimation de canal de domaine fréquentiel de bit pilote obtenue en domaine temporel, obtenant ainsi une valeur d'estimation de canal de domaine temporel ;
**caractérisé par**
effectuer (305) une séparation multi-utilisateur et une réduction de bruit pour chaque antenne de réception et pour chaque utilisateur dans le domaine temporel sur la valeur d'estimation de canal de domaine temporel ;
rechercher (306), dans une longueur d'une fenêtre d'estimation de canal de domaine temporel, un pic pour chaque utilisateur séparément dans le domaine temporel pour déterminer une position du pic ; et
calculer (307) une valeur d'estimation de décalage temporel de symbole de chaque utilisateur sur la base de la position du pic.

**2.** Procédé selon la revendication 1, dans lequel
la valeur d'estimation de canal de domaine fréquentiel de bit pilote de l'utilisateur est un quotient obtenu en divisant un signal de référence de démodulation de domaine fréquentiel reçu par un signal de référence de démodulation de domaine fréquentiel local.

**3.** Procédé selon la revendication 1, dans lequel
une longueur de la valeur d'estimation de canal de domaine fréquentiel de bit pilote de l'utilisateur est $M$,
dans l'étape de transformation de la valeur d'estimation de canal de domaine fréquentiel de bit pilote obtenue en domaine temporel :

si $M$ est supérieure ou égale à $T$, la valeur d'estimation de canal de domaine fréquentiel est directement transformée en domaine temporel par une transformée de Fourier inverse ;
si $M$ est inférieure à $T$, la valeur d'estimation de canal de domaine fréquentiel obtenue est étendue à la longueur de $T$ et est ensuite transformée en domaine temporel par la transformée de Fourier inverse ;
où $T$ est un paramètre de longueur de transformation d'estimation de canal du domaine fréquentiel au domaine temporel, et est un entier positif.

**4.** Procédé selon la revendication 3, dans lequel l'extension de la valeur d'estimation de canal de domaine fréquentiel obtenue à la longueur de $T$, signifie que :
la valeur d'estimation de canal de domaine fréquentiel est étendue à la longueur de $T$ en effectuant un remplissage avec des zéros, et les positions remplies se trouvent devant ou derrière la valeur d'estimation de canal de domaine fréquentiel, ou partiellement devant et partiellement derrière la valeur d'estimation de canal de domaine fréquentiel.

**5.** Procédé selon la revendication 1, dans lequel la longueur de la fenêtre d'estimation de canal de domaine temporel de chaque utilisateur est calculée de la manière suivante :

déterminer une position de référence de la fenêtre d'estimation de canal de domaine temporel d'un utilisateur $m$ dans une séquence de domaine temporel ;
déterminer une longueur de fenêtre avant $L_{fore} = \lambda_f L_c$ et une longueur de fenêtre arrière $L_{post} = \lambda_p L_c$, de la position de référence sur la base d'un paramètre de longueur de fenêtre calculé $L_c$ associé au préfixe cyclique, CP, où $\lambda_f$ et $\lambda_p$ sont des facteurs d'ajustement de largeur de fenêtre ;
ajouter la longueur de la fenêtre avant et la longueur de la fenêtre arrière pour obtenir la longueur de la fenêtre d'estimation du canal du domaine temporel : $L_w = L_{fore} + L_{post}$.

6. Procédé selon la revendication 5, dans lequel
$L_c$ est déterminé sur la base d'une relation relative entre la longueur $M$ de la valeur d'estimation de canal de domaine fréquentiel de l'utilisateur $m$ et le paramètre de longueur $T$ de la transformation d'estimation de canal du domaine fréquentiel en domaine temporel, spécifiquement :

si $M \geq T,$ la longueur correspondant au préfixe cyclique est

$$L_c = \max\left(\left\lfloor M \cdot \frac{L_{CP}}{2048} \right\rfloor, 1\right);$$

si $M < T,$ la longueur correspondant au préfixe cyclique est

$$L_c = \max\left(\left\lfloor T \cdot \frac{L_{CP}}{2048} \right\rfloor, 1\right);$$

où $L_{CP}$ est la longueur du préfixe cyclique.

7. Procédé selon la revendication 1, dans lequel l'étape de réalisation d'une réduction de bruit pour chaque antenne de réception et pour chaque utilisateur dans le domaine temporel sur la valeur d'estimation de canal de domaine temporel comprend de :
mettre des valeurs de prise en dehors de la fenêtre d'estimation de canal de domaine temporel correspondant à chaque utilisateur à 0, et maintenir les valeurs de prise à l'intérieur de la fenêtre pour qu'elles soient des valeurs d'estimation de canal de domaine temporel originales, pour mettre en oeuvre une réduction de bruit dans le domaine temporel de chaque antenne.

8. Procédé selon la revendication 1, dans lequel l'étape de recherche du pic pour chaque utilisateur séparément dans le domaine temporel pour déterminer la position du pic comprend de :

calculer une pluralité de moyennes arithmétiques de la puissance d'estimation de canal de multiples antennes dans deux intervalles de temps de l'utilisateur $m$ ;
rechercher une position correspondant à une valeur maximale parmi la pluralité de moyennes arithmétiques dans la longueur de la fenêtre d'estimation de canal de domaine temporel de l'utilisateur $m$ pour déterminer la position correspondant à la valeur maximale, c'est-à-dire, la position du pic.

9. Procédé selon la revendication 1, dans lequel, dans l'étape de calcul de la valeur d'estimation de décalage temporel de symbole de chaque utilisateur sur la base de la position du pic :

si la longueur $M$ de la valeur d'estimation de canal de domaine fréquentiel de l'utilisateur $m$ est supérieure ou égale à $T,$ la valeur d'estimation de décalage temporel de symbole de l'utilisateur $m$ est :

$$n_{TA}^{(m)} = \begin{cases} \left\lfloor n_{max}^{(m)} \cdot \dfrac{128}{M} \right\rfloor, & 0 \leq n_{max}^{(m)} \leq \dfrac{M}{2} \\[3mm] \left\lfloor \left(n_{max}^{(m)} - M^{(m)}\right) \cdot \dfrac{128}{M^{(m)}} \right\rfloor, & \text{sinon} \end{cases}$$

si la longueur $M$ de la valeur d'estimation de canal de domaine fréquentiel de l'utilisateur $m$ est inférieure à $T,$ la valeur d'estimation de décalage temporel de symbole de l'utilisateur $m$ est :

$$n_{TA}^{(m)} = \begin{cases} n_{max}^{(m)} \cdot \left\lfloor \dfrac{128}{T} \right\rfloor, & 0 \le n_{max}^{(m)} \le \dfrac{M}{2} \\ (n_{max}^{(m)} - T) \cdot \left\lfloor \dfrac{128}{T} \right\rfloor, & \text{sinon} \end{cases}$$

où $n_{TA}^{(m)}$ est la valeur d'estimation de décalage temporel de symbole, $n_{max}^{(m)}$ est la position du pic, $M^{(m)}$ est la longueur de la valeur d'estimation de canal de domaine fréquentiel de l'utilisateur *m,* et *T* est le paramètre de longueur de transformation d'estimation de canal du domaine fréquentiel au domaine temporel.

10. Procédé selon la revendication 1, dans lequel, après le calcul de la valeur d'estimation de décalage temporel de symbole de chaque utilisateur, le procédé comprend en outre les étapes suivantes :

générer un mot de commande à partir de la valeur d'estimation de décalage temporel de symbole à rapporter à la couche de commande d'accès au support (MAC) ;
la couche de commande d'accès au support (MAC) notifie, conformément au mot de commande, à un équipement d'utilisateur (UE) d'effectuer un ajustement de synchronisation sur la base de la valeur d'estimation de décalage temporel de symbole dans le mot de commande ; et
une station de base compense le décalage temporel de symbole de données reçues sur la base de la valeur d'estimation de décalage temporel de symbole dans le mot de commande.

11. Dispositif d'estimation d'un décalage temporel de symbole dans un système de multiplexage par répartition orthogonale de la fréquence, OFDM, comprenant :

un module d'estimation de canal de bit pilote (A) configuré pour obtenir une valeur d'estimation de canal de domaine fréquentiel de bit pilote de multiples utilisateurs et transmettre la valeur d'estimation de canal de domaine fréquentiel à un module de transformation de domaine fréquentiel en domaine temporel (B) ;
le module de transformation de domaine fréquentiel en domaine temporel (B) étant configuré pour transformer la valeur d'estimation de canal de domaine fréquentiel obtenue en domaine temporel, obtenant ainsi une estimation de canal de domaine temporel ;
**caractérisé par**
un module de séparation multi-utilisateur et de réduction de bruit (C) configuré pour effectuer une séparation multi-utilisateur et une réduction de bruit pour chaque antenne de réception et pour chaque utilisateur dans le domaine temporel sur la valeur d'estimation de canal de domaine temporel ;
un module de recherche de pic (D) configuré pour rechercher, dans une longueur d'une fenêtre d'estimation de canal de domaine temporel, un pic pour chaque utilisateur séparément dans le domaine temporel afin de déterminer une position du pic ; et
un module de calcul de valeur d'estimation de décalage temporel de symbole (E) configuré pour calculer une valeur d'estimation de décalage temporel de symbole de chaque utilisateur sur la base de la position du pic.

12. Dispositif selon la revendication 11, dans lequel
le module de transformation de domaine fréquentiel en domaine temporel est en outre configuré pour, lors d'une transformation de domaine fréquentiel en domaine temporel, si une longueur *M* de la valeur d'estimation de canal de domaine fréquentiel est supérieure ou égale à *T,* transformer directement la valeur d'estimation de canal de domaine fréquentiel en domaine temporel par une transformée de Fourier inverse ; sinon, étendre la valeur d'estimation de canal de domaine fréquentiel obtenue à la longueur de *T* pour la transformer en domaine temporel par la transformée de Fourier inverse, où *T* est un paramètre de longueur de transformation d'estimation de canal du domaine fréquentiel en domaine temporel, et est un entier positif.

13. Dispositif selon la revendication 11, dans lequel le module de calcul de valeur d'estimation de décalage temporel de symbole est en outre configuré pour, lors du calcul de la valeur d'estimation de décalage temporel de symbole de chaque utilisateur sur la base de la position du pic,
si la longueur *M* de la valeur d'estimation de canal de domaine fréquentiel de l'utilisateur *m* est supérieure ou égale à *T,* déterminer la valeur d'estimation de décalage temporel de symbole de l'utilisateur *m* comme étant :

$$n_{TA}^{(m)} = \begin{cases} \left\lfloor n_{\max}^{(m)} \cdot \dfrac{128}{M} \right\rfloor, & 0 \le n_{\max}^{(m)} \le \dfrac{M}{2} \\[4mm] \left\lfloor \left( n_{\max}^{(m)} - M^{(m)} \right) \cdot \dfrac{128}{M^{(m)}} \right\rfloor, & \text{sinon} \end{cases}$$

si la longueur $M$ de la valeur d'estimation de canal de domaine fréquentiel de l'utilisateur $m$ est inférieure à $T$, déterminer la valeur d'estimation de décalage temporel de symbole de l'utilisateur $m$ comme étant :

$$n_{TA}^{(m)} = \begin{cases} \left\lfloor n_{\max}^{(m)} \cdot \dfrac{128}{M} \right\rfloor, & 0 \le n_{\max}^{(m)} \le \dfrac{M}{2} \\[4mm] \left\lfloor \left( n_{\max}^{(m)} - M^{(m)} \right) \cdot \dfrac{128}{M^{(m)}} \right\rfloor, & \text{sinon} \end{cases}$$

où $n_{TA}^{(m)}$ est la valeur d'estimation de décalage temporel de symbole, $n_{max}^{(m)}$ est la position du pic, $M^{(m)}$ est la longueur de la valeur d'estimation de canal de domaine fréquentiel de l'utilisateur $m$, et $T$ est le paramètre de longueur de transformation d'estimation de canal du domaine fréquentiel au domaine temporel, et $T \ge 128$.

**14.** Dispositif selon la revendication 11, 12 ou 13, dans lequel le dispositif comprend en outre un module de génération de commande d'ajustement temporel (F) configuré pour générer un mot de commande à partir de la valeur d'estimation de décalage temporel de symbole.

FIG. 1

A

Pilot bit
channel
estimation
module

B

Frequency domain
to time domain
transformation
module

C

Multi-user
separation
and noise
reduction
module

D

Peak search
module

E

Time offset
estimation
value
calculation
module

F

Time
adjustment
command
generation
module

FIG. 2

```
┌─────────────────────────────────────────────┐
│  Obtaining a pilot bit frequency domain      │ ─── 301
│       channel estimation value               │
└─────────────────────────────────────────────┘
                      │
                      ▼
              ╱───────────────╲  ─── 302
            ╱  The length of the ╲
          ╱   channel estimation   ╲
         ╱     value is greater      ╲
          ╲    than or equal to T?   ╱
   Yes      ╲───────────────────╱      No
    │                                   │
    ▼                                   ▼
┌──────────────────────┐         ┌──────────────────────┐
│  Transforming to time │ ─ 303   │ Extending the frequency│ ─ 304
│ domain through inverse │        │   domain channel       │
│  Fourier transform     │        │  estimation value and  │
└──────────────────────┘         │ then transforming to   │
    │                            │ time domain through    │
    │                            │ inverse Fourier transform│
    │                            └──────────────────────┘
    │                                   │
    └──────────────┬────────────────────┘
                   ▼
┌─────────────────────────────────────────────┐
│ Performing multi-user separation and time    │ ─── 305
│ domain noise reduction on time domain pilot   │
│           channel estimation                  │
└─────────────────────────────────────────────┘
                   ▼
┌─────────────────────────────────────────────┐
│    Searching for a peak of time domain       │ ─── 306
│  channel estimation of the user and          │
│   determining a position of the peak         │
└─────────────────────────────────────────────┘
                   ▼
┌─────────────────────────────────────────────┐
│ Determining a time offset estimation value    │ ─── 307
│ based on the position of the peak and         │
│ generating a TA command based on the time     │
│         offset estimation value               │
└─────────────────────────────────────────────┘
```

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005112378 A1

- EP 1734715 A2